# EUROPEAN PATENT SPECIFICATION

(11) **EP 3 860 357 B1**
(45) Date of publication and mention of the grant of the patent: **27.03.2024**
(21) Application number: 19779906.7
(22) Date of filing: 03.10.2019
(51) Int. Cl.: A23G 9/50, B65D 75/58, B65D 85/78

(54) **FROZEN CONFECTION PACKAGING**
VERPACKUNG VON GEFRORENEM KONFEKT
EMBALLAGE DE PRODUITS DE CONFISERIE CONGELÉS

(30) Priority: 04.10.2018 EP 18198589
(43) Date of publication of application: 11.08.2021
(73) Proprietor: Unilever IP Holdings B.V., 3013 AL Rotterdam (NL)
(72) Inventor: MARTINS DOS SANTOS, Tais, Sharnbrook Bedfordshire MK44 1LQ (GB)
(74) Representative: Turner, Felicity Margaret Mary
(86) International application number: PCT/EP2019/076829
(87) International publication number: WO 2020/070251

(56) References cited:
- EP-A1- 1 650 137
- EP-A1- 2 576 204
- EP-A1- 2 589 547
- EP-A1- 2 952 451
- EP-B1- 0 310 578
- EP-B1- 2 576 204
- EP-B1- 2 589 547
- WO-A1-2011/146627
- WO-A1-2011/158014
- WO-A1-2013/114091
- WO-A1-2016/184818
- WO-A1-2017/116797
- WO-A2-2011/004156
- GB-A- 732 026
- GB-A- 2 441 320
- US-A1- 2005 276 525

## Description

### Technical Field of the Invention

A wrapped frozen confection product comprising a frozen confection product and a wrapper, wherein the wrapper comprises a front face, a back face, and sealed ends, the back face having a longitudinal seal running between the sealed ends, characterised in that the front face of the wrapper has at least one line of weakness defining an opening through which the frozen confection can be removed and the at least one line of weakness is positioned adjacent to the front face of the frozen confection product, the line of weakness defining an opening through which the frozen confection product can be removed corresponds to from 5% to 95% of the outline of the cross-sectional shape of the opposing face of the frozen confection product, characterised in that the outline of the cross-sectional shape of the frozen confection product is oval, and the width of the opening is at most 100 percent of the width of the cross-sectional shape of the frozen confection product.

### Background of the Invention

Frozen confection products such as ice creams and choc ices are often provided in flow wrap packaging in which the products are provided in a flexible wrapper that is sealed at the ends and along an edge between the ends. Products are accessed by tearing open one of the end seals and pulling the wrapping apart and away from the product. Alternatively, as disclosed in GB 732,026, a transverse strip defined by generally parallel lines of weakness substantially encircling the envelope enabling a part of the envelope to be discarded may be provided. EP 2 589 547 A1, WO 2017/116797 A1 and WO 2016/184818 A1 disclose wrappers having a line of weakness as an opening means. Sometimes frozen confection products are provided on sticks or in cones that allow the product to be held, but if not then the flow wrapping also acts as a holder for the product.

Frozen confection products are by their nature messy to eat due to the product melting and dripping, or because the coatings or wafers flake and drop off. When frozen confection products are provided in known wrappers (packaging) these drips, flakes, and the like can get on the hands and clothes of consumers.

There is therefore a need for an improved form of packaging and the present invention provides a particular modification to traditional frozen confection product packaging that addresses these issues.

The present invention provides a wrapped frozen confection product comprising a frozen confection product and a wrapper, wherein the wrapper is opened in the direction of consumption of the frozen confection product present within the wrapper. The extent of opening of the wrapper coincides with the extent of consumption of the frozen confection product enabling the wrapper to capture any components (e.g.: flakes, drips) that fall off the frozen confection product.

Typically, the wrapper is a flow-wrap wrapper and has a different shape to the frozen confection product. The difference in shape between the flow-wrap wrapper and frozen confection product results in a looser fit of the wrapper around the frozen confection product than, for example, a cardboard box that fits snugly against the contours of the frozen confection product. This looser fit of the wrapper about the frozen confection product provides a recess for collecting any components (e.g.: flakes, drips) that fall off the frozen confection product.

Furthermore, the coincidence of opening the wrapper whilst consuming the frozen confection product results in the consumer exposing enough frozen confection product to consume and without having to move the frozen confection product within the wrapper. The possibility of allowing the frozen confection product to be accessed by opening the wrapper prevents any flakes or liquid frozen confection or coating being pushed out to the wrapper if, for example, it was necessary to shuffle the frozen confection product towards the opening of wrapper.

### Summary of the Invention

Accordingly, the present invention provides a frozen confection in a pack having a front face, a back face, and sealed ends, the back face having a longitudinal seal running between the sealed ends, characterised in that the front face has at least one line of weakness defining an opening through which the frozen confection can be removed.

A 'pack' is also known as a wrapper or packaging.

In a preferred embodiment, the invention is related to a wrapped frozen confection product comprising a frozen confection product and a wrapper, wherein the wrapper comprises a front face, a back face, and sealed ends, the back face having a longitudinal seal running between the sealed ends, the front face of the wrapper has at least one line of weakness defining an opening through which the frozen confection can be removed and the at least one line of weakness is positioned adjacent to the front face of the frozen confection product, wherein

The line of weakness defining an opening through which the frozen confection product can be removed corresponds to from 5% to 95% of the outline of the cross-sectional shape of the opposing face of the frozen confection product characterised in that the outline of the cross-sectional shape of the frozen confection product is oval, and the width of the opening is at most 100 percent of the width of the cross-sectional shape of the frozen confection product.. Preferably at least one line of weakness defining an opening through which the frozen confection product can be removed corresponds to from 10% to 85% of the outline of the shape of the opposing face of the frozen confection product. More preferably at least one line of weakness defining an opening through which the frozen confection product can be removed corresponds to from 20% to 75% of the outline of the shape of the opposing face of the frozen confection product.

The at least one line of weakness defining an opening through which the frozen confection product can be removed corresponds to the outline of the shape of the opposing face of the frozen confection product.

The front face of the wrapper has one line of weakness defining an opening through which the frozen confection can be removed. The line of weakness is present on the front of the wrapper. More preferably the line of weakness is present on the front of the wrapper only.

The shape of the line of weakness defining an opening through which the frozen confection can be removed is a semi-circle.

The wrapper is a flow wrap wrapper. Typically, flow-wrap wrappers are tubular and comprise sealed ends and a longitudinal seal. Where the wrapper is a flow wrap wrapper, the front face and back face correspond to the wrapper positioned adjacent to the faces of the frozen confection product comprising the largest surface area. The back face comprises the longitudinal seal.

The frozen confection product comprises frozen confection.

The frozen confection is ice cream.

The frozen confection product is a coated frozen confection. Preferably the frozen confection is coated with chocolate.

The outline of the shape of the frozen confection product is oval. The outline of the shape of the frozen confection product means the outline of the shape of the face of the frozen confection product comprising the largest surface area. Preferably the outline of the cross-sectional shape of the frozen confection corresponds to the shape of the face of the frozen confection in the plane of the face of the frozen confection with the greatest surface area, typically what is known as the front of the frozen confection.

The outline of the shape of the frozen confection corresponds to the outline of the cross-sectional shape of the frozen confection. The outline of cross-sectional shape of the frozen confection is oval.

Preferably the cross-sectional shape of the frozen confection product has a width of at most 75 mm, more preferably at most 70 mm, more preferably at most 65 mm, more preferably at most 60 mm, more preferably at most 55 mm, more preferably at most 50 mm, more preferably at most 45 mm.

The line of weakness defining an opening through which the frozen confection can be removed is a semi-circle and the maximum distance between two points on the line of weakness is 100% of the width of the frozen confection product.

Preferably the width of the opening is at most 100% of the width of the cross-sectional shape of the frozen confection, more preferably at most 95%, more preferably at most 90%, more preferably at most 85%, more preferably at most 80%, more preferably at most 75%, more preferably at most 70%. Width means the length of the shortest distance of the front face of the frozen confection.

The length of the opening portion is from 15% to 75% of the length of the length of the frozen confection product.

Preferably the length of the opening is at most 75% of the length of the cross-sectional shape of the frozen confection, more preferably at most 70%, more preferably at most 65%, more preferably at most 60%, more preferably at most 55%, more preferably at most 50%.

Opening means the void created on the front of the wrapper when the line of weakness of the wrapper is broken.

Preferably the at least one line of weakness has J-shaped termini.

### Detailed Description of the Invention

Flow wrapping is a type of continuous and automated assembly line product packaging, used for an array of different products including frozen confection products. A flow wrapping machine constructs packs out of a flat roll or rolls of film. The film is typically plastic but flow wrapping can also be used to form containers made from paper and fabric simply by changing the edge sealing and/or seaming methods. As the packs are formed they are simultaneously filled with product and sealed.

Flow wrapping machines are typically loaded with a continuous flat roll of film, to which labelling and artwork has been applied to the exterior and/or interior. As the film is unrolled, it may first be sterilized prior to use in the packaging system. The film is usually fed onto and around the wider part of a long hollow conical forming tool and progressed in a wrapping motion around the conical tool towards the narrower end. As the foil progresses towards the narrower end, the outer edges of the film wrap around the tube and come together to form a flap which is then sealed to form a longitudinal seal. Sealing can be achieved through adhesive, heat-bonding or other suitable means. The film is thus formed into a tube-like structure.

In the next step the tube-like structure is further sealed perpendicular to the longitudinal seal using a sealing bar or similar means to form one of the ends of the final pack. The product to be contained in the pack is then inserted into the tube, typically through the inside of the hollow conical tool. Once the product has been inserted, a sealing bar seals the other end of the pack and in doing so also forms the end of the next bag. The product is thus sealed in the pack and the packaged product is cut off from the tube-like structure as a sealed package, ready to advance onward into the product boxing and shipping processes.

The feeding of products, the sealing of the longitudinal seal and the sealing of the end seals, and the cutting of the packs can all be determined by pouch length, or indexing to markers detectable by visual sensors, or other means known to the skilled person.

During the final sealing process, the packs may be filled with air from a blower or from an inert gas supply. Inflating the bag helps reduce the crushing of fragile products, while inflating with an inert gas helps drive out oxygen and retards the growth of bacteria that could spoil the product.

Dual web systems are also available for four side sealed packs, as well as pouches requiring different materials for each side. Dual web systems use two rolls of material instead of one, which are fed in from opposite sides of the machine. The bottom and sides are heat sealed together to form the pouch, and the product is loaded from the top. The pouch with loaded product then advances downwards and the top is sealed and pouch is cut off. The sealing of the top of the pouch forms the bottom of the next pouch. Dual web systems may also be provided by the present invention.

Frozen confection products such as ice creams and choc ices have long been provided in flow wrap packaging, sealed at the ends and with the longitudinal seal on the back side of the pack and the main artwork on the front side of the pack. These packs are opened by tearing open one of the end seals and pulling the wrapping apart and away from the product. It is well known that frozen confection products are sometimes messy to eat because the product melts and drips, or because coatings or wafers flake and drop off. When products are provided in flow wrap the pack can also act as a holder for the product, but any drips or flakes are not caught by the pack and can fall onto the hands or clothes of consumers. However, the present invention has found that a surprisingly simple modification to the pack overcomes these issues.

As mentioned above, flow wrapping is used for an array of different product types and has indeed been used for items such as baby wipes, moistened wipes, tissues, and the like. These products are formed in layers and require dispensing one at a time. It will be appreciated that opening one of these flow wrapped packs by tearing open one of the end seals and pulling the wrapping apart and away from the product is not appropriate because the products need to be resealed into the pack for later dispensing of the wipes, tissues, etc. Therefore, these packs are provided with resealable openings on the front face of the pack. These allow the pack to be stored with the longitudinal seal at the base and the other front face uppermost. The opening on the front face then allows access to the products therein and individual sheets of baby wipes, moistened wipes, tissues, and the like may be removed.

The inventors have now surprisingly found that such an opening on the front face is also beneficial for frozen confection products, especially coated frozen confection products. Therefore the invention provides a frozen confection (i.e.: a frozen confection product) in a pack (i.e.: , the pack having a front face, a back face, and sealed ends, wherein the back face has a longitudinal seal running between the sealed ends. The inventive pack is characterised in that the front face has at least one line of weakness that defines an opening through which the frozen confection product can be removed.

By providing an opening in this way the product may be easily accessed yet the package provides a receptacle for any drips or flakes that may fall from the product during use or consumption. This is surprisingly still the case even if the pack and product are held vertically which is the preferred and more typical way of consuming frozen confection products.

The line of weakness can be formed by laser scoring or by mechanical scoring or cutting such as by die cutting or kiss cutting.

In use, the consumer creates an opening along the line of weakness, for example by pulling on a tab, and thus creates an aperture through which the product can be accessed and removed. The invention is characterised by its simplicity because the opening need not be resealable and therefore no adhesives are required.

Preferably the line of weakness has J-shaped or hooked termini to arrest the tearing movement and prevent the opening becoming too large.

The frozen confection product is preferably an ice cream because this product format is particularly prone to melting and therefore dripping. The frozen confection product is also preferably coated, preferably with chocolate because coatings are prone to flaking and chocolate flakes are particularly problematic for causing mess. Since the invention allows for clean consumption of the products the frozen confection product does not need to have a stick or an edible receptible such as a cone or wafers to hold while eating. Therefore, the frozen confection product preferably does not comprise a stick or an external wafer.

Frozen confection products can come in many shapes and sizes such as in cones or rectangular blocks or even shaped as animals and rockets. These shapes can all be characterised by their cross-sectional shape or outline. For example, a rectangular block has a rectangular cross-sectional shape, a sphere has a circular cross-sectional shape, an elongated sphere has an oval cross-sectional shape. Preferably the cross-sectional shape of the frozen confection is rectangular, more preferably rectangular with rounded corners, most preferably oval.

The opening that is defined by the line of weakness preferably corresponds to the cross-sectional shape of outline of the product. This ensures that the pack moulds itself around the product as it is removed and consumed and therefore any drips, flakes or the like are caught by the packaging.

The invention has found that if the opening is slightly smaller than the product then the pack moulds itself even better around the product. Therefore, the width of the opening is preferably at most 100% of the width of the cross-sectional shape of the frozen confection product, more preferably at most 95%, more preferably at most 90%, more preferably at most 85%, more preferably at most 80%, more preferably at most 75%, more preferably at most 70%.

The cross-sectional shape of the frozen confection product preferably has a width of at most 75 mm, more preferably at most 70 mm, more preferably at most 65 mm, more preferably at most 60 mm, more preferably at most 55 mm, more preferably at most 50 mm, more preferably at most 45 mm.

In order to help the pack to be used as a holder for the frozen confection product, the length of the opening portion is preferably at most 75% of the length of the cross-sectional shape of the frozen confection product, more preferably at most 70%, more preferably at most 65%, more preferably at most 60%, more preferably at most 55%, more preferably at most 50%. This ensures that the bottom portion of the product sits within the pack during consumption but can be easily accessed at the latter stages of consumption by manipulating the packaging to expose the frozen confection product . Naturally, this manipulation is done while holding the packaging thus preventing mess.

The cross-sectional shape of the frozen confection product preferably has a length of at most 150 mm, more preferably at most 140 mm, more preferably at most 130 mm, more preferably at most 120 mm, more preferably at most 110 mm, more preferably at most 100 mm, more preferably at most 90 mm.

If the product or opening does not have a consistent width (for example they are oval) then the width refers to the maximum width of the product or opening. Similarly, if the product or opening does not have a consistent length, then the width refers to the maximum length of the product or opening.

Although the packing of the invention may be formed from a simple monolayer, it may also be formed from a laminate, having an outer structure joined in face-to-face relation with an inner structure. Each of the outer and inner structures can comprise one or more layers of flexible packaging material such as polymer film, paper, metal foil, and the like.

An outer line of weakness would be formed in the outer structure to define an outer opening portion that can be lifted out of the plane of the outer structure. Similarly, an inner line of weakness would be formed in the inner structure to define an inner opening portion that can be lifted out of the plane of the inner structure. The outer and inner opening portions would be attached to each other such that the outer and inner opening portions can be lifted out of the plane as a unit, thereby creating an opening in the front face of the pack defined by the inner line of weakness.

The outer opening portion is preferably larger in area than the inner opening portion and preferably has a marginal region that extends beyond the peripheral edge of the inner opening portion. When the outer and inner opening portions are lifted out of the plane to create the opening, an underlying portion of the inner structure in registration with the marginal region of the outer opening portion is exposed adjacent the opening.

In such a packaging format, it is the inner opening through which the product needs to be removed and therefore it is the inner opening that would be slightly smaller than the product. Therefore, the width of the inner opening is preferably at most 100% of the width of the cross-sectional shape of the frozen confection, more preferably at most 95%, more preferably at most 90%, more preferably at most 85%, more preferably at most 80%, more preferably at most 75%, more preferably at most 70%. The length of the inner opening is preferably at most 75% of the length of the cross-sectional shape of the frozen confection, more preferably at most 70%, more preferably at most 65%, more preferably at most 60%, more preferably at most 55%, more preferably at most 50%. Again, this ensures that the bottom portion of the product sits within the pack during consumption but can be easily access at the latter stages of consumption by manipulating the packaging. Naturally, this manipulation is done while holding the packaging thus preventing mess.

Again, if the product or opening does not have a consistent width (for example they are oval) then the width refers to the maximum width of the product or opening. Similarly, if the product or opening does not have a consistent length, then the width refers to the maximum length of the product or opening.

To prepare such a laminate packaging structure, a permanent laminating adhesive can be pattern-applied onto one surface of the outer structure and the outer structure adhesively joined to the inner structure via the permanent adhesive to form a laminate. The outer structure and inner structure may be coextensive with each other, and advantageously are each continuous webs drawn from respective supply rolls and laminated together to form a laminate that is a continuous web.

The laminate may then be advanced to a scoring station at which the outer line of weakness is formed through the thickness of the outer structure, and the inner score line is formed through the thickness of the inner structure. The outer score line delineates the outer opening portion of the outer structure that is separable from the outer structure along the outer score line, and the inner score line delineates the inner opening portion of the inner structure that is affixed to the outer opening portion by the permanent adhesive and is separable from the inner structure along the inner score line.

The score lines can be formed by laser scoring or by mechanical scoring or cutting such as by die cutting or kiss cutting. The adhesive can be applied to the outer structure but alternatively can be applied to the inner structure using any suitable equipment and technique, such as by a gravure roll or the like.

The adhesive can be applied such that there is a region that is free of the adhesive to form a thumb tab or grasping portion of the opening portion that can be readily grasped and pulled back to initiate opening.

The outer line of weakness or score line preferably penetrates through the thickness of the outer structure but not through the inner structure. Similarly, the inner score line preferably penetrates through the thickness of the inner structure but not through the outer structure.

The inner structure of the laminate advantageously includes a sealant layer forming the inner surface of the laminate. The sealant layer can comprise a heat seal material such as polyethylene, polypropylene, ionomer resin, or a cold seal material. The heat seal or cold seal layer can comprise either a film or a coating. The inner structure may also include a barrier layer providing a barrier against the passage of moisture and/or oxygen. Barrier layers can comprise any of various polymer-based barrier materials including barrier polymer films such as ethylene vinyl alcohol copolymer (EVOH), polyamide, and the like; metallized polyolefin films such as polyethylene, polypropylene, oriented polypropylene, and the like; aluminium oxide -coated polymer films; silicone oxidecoated polymer films; metal foil such as aluminum foil; and others.

The outer structure may include a layer of polyester such as polyethylene terephthalate, which has desirable tactile properties and is readily printed. The polyester layer can be printed with inks to provide graphics and indicia.

The packaging may be manufactured using an in-line process wherein the opening and reclose features are formed in the packaging laminate during the production of the laminate.

As used herein the term "comprising" encompasses the terms "consisting essentially of" and "consisting of". Where the term "comprising" is used, the listed steps or options need not be exhaustive. Unless otherwise specified, numerical ranges expressed in the format "from x to y" are understood to include x and y. In specifying any range of values or amounts, any particular upper value or amount can be associated with any particular lower value or amount. All numbers are to be understood as modified by the word "about" and as used herein, the indefinite article "a" or "an" and its corresponding definite article "the" means at least one, or one or more, unless specified otherwise.

## Claims

1. A wrapped frozen confection product comprising a frozen confection product and a wrapper, wherein the wrapper comprises a front face, a back face, and sealed ends, the back face having a longitudinal seal running between the sealed ends, the front face of the wrapper has at least one line of weakness defining an opening through which the frozen confection can be removed and the at least one line of weakness is positioned adjacent to the front face of the frozen confection product, wherein at least one line of weakness defining an opening through which the frozen confection product can be removed corresponds to from 5% to 95% of the outline of the cross-sectional shape of the opposing face of the frozen confection product, **characterised in that** the outline of the cross-sectional shape of the frozen confection product is oval, and the width of the opening is at most 100 percent of the width of the cross-sectional shape of the frozen confection product.

2. A wrapped frozen confection product according to claim 1, wherein at least one line of weakness defining an opening through which the frozen confection product can be removed corresponds to the outline of the shape of the opposing face of the frozen confection product.

3. A wrapped frozen confection product according to any of claims 1 to 2, wherein the front face of the wrapper has one line of weakness defining an opening through which the frozen confection can be removed.

4. A wrapped frozen confection product according to any of claims 1 to 3, wherein the shape of the line of weakness defining an opening through which the frozen confection can be removed is a semi-circle.

5. A wrapped frozen confection product according to any of claims 1 to 4, wherein the wrapper is a flow wrap wrapper.

6. A wrapped frozen confection product according to any of claims 1 to 5, wherein the frozen confection product comprises frozen confection.

7. A wrapped frozen confection product according to claim 6, wherein the frozen confection is ice cream.

8. A wrapped frozen confection product according to any of claims 1 to 7, wherein the frozen confection product is a coated frozen confection.

9. A wrapped frozen confection product according to any of claims 1 to 8, wherein the length of the frozen confection product is from 90 mm to 150mm.

10. A wrapped frozen confection product according to any of claims 1 to 9, wherein the width of the frozen confection product is from 45 mm to 75mm.

11. A wrapped frozen confection product according to any of claims 1 to 10, wherein of the line of weakness defining an opening through which the frozen confection can be removed is a semi-circle and the maximum distance between two points on the line of weakness is 100% of the width of the frozen confection product.

12. A wrapped frozen confection product according to any of claims 1 to 11, wherein the length of the opening portion is from 15% to 75% of the length of the longest length of the frozen confection product.

## Patentansprüche

1. Umhülltes gefrorenes Konfektprodukt, das ein gefrorenes Konfektprodukt und eine Hülle umfasst, wobei die Hülle eine Vorderseite, eine Rückseite und abgedichtete Enden umfasst, wobei die Rückseite eine längliche Abdichtung hat, die zwischen den abgedichteten Enden verläuft, wobei die Vorderseite der Hülle wenigstens eine Schwächungslinie hat, die eine Öffnung definiert, durch die das gefrorene Konfekt entnommen werden kann, und wobei die wenigstens eine Schwächungslinie angrenzend an die Vorderseite des gefrorenen Konfektprodukts positioniert ist, wobei wenigstens eine Schwächungslinie, die eine Öffnung definiert, durch die das gefrorene Konfektprodukt entnommen werden kann, 5 % bis 95 % des Umrisses der Querschnittsform der gegenüberliegenden Seite des gefrorenen Konfektprodukts entspricht, **dadurch gekennzeichnet, dass** der Umriss der Querschnittsform des gefrorenen Konfektprodukts oval ist, und dass die Breite der Öffnung höchstens 100 Prozent der Breite der Querschnittsform des gefrorenen Konfektprodukts beträgt.

2. Umhülltes gefrorenes Konfektprodukt nach Anspruch 1, wobei wenigstens eine Schwächungslinie, die eine Öffnung definiert, durch die das gefrorene Konfektprodukt entnommen werden kann, dem Umriss der Form der gegenüberliegenden Seite des gefrorenen Konfektprodukts entspricht.

3. Umhülltes gefrorenes Konfektprodukt nach einem der Ansprüche 1 bis 2, wobei die Vorderseite der Hülle eine Schwächungslinie hat, die eine Öffnung definiert, durch die das gefrorene Konfekt entnommen werden kann.

4. Umhülltes gefrorenes Konfektprodukt nach einem der Ansprüche 1 bis 3, wobei die Form der Schwächungslinie, die eine Öffnung definiert, durch die das gefrorene Konfekt entnommen werden kann, ein Halbkreis ist.

5. Umhülltes gefrorenes Konfektprodukt nach einem der Ansprüche 1 bis 4, wobei die Hülle eine Schlauchbeutelhülle ist.

6. Umhülltes gefrorenes Konfektprodukt nach einem der Ansprüche 1 bis 5, wobei das gefrorene Konfektprodukt gefrorenes Konfekt umfasst.

7. Umhülltes gefrorenes Konfektprodukt nach Anspruch 6, wobei das gefrorene Konfekt Eiscreme ist.

8. Umhülltes gefrorenes Konfektprodukt nach einem der Ansprüche 1 bis 7, wobei das gefrorene Konfektprodukt ein beschichtetes gefrorenes Konfekt ist.

9. Umhülltes gefrorenes Konfektprodukt nach einem der Ansprüche 1 bis 8, wobei die Länge des gefrorenen Konfektprodukts im Bereich von 90 mm bis 150 mm liegt.

10. Umhülltes gefrorenes Konfektprodukt nach einem der Ansprüche 1 bis 9, wobei die Breite des gefrorenen Konfektprodukts im Bereich von 45 mm bis 75 mm liegt.

11. Umhülltes gefrorenes Konfektprodukt nach einem der Ansprüche 1 bis 10, wobei die Schwächungslinie, die eine Öffnung definiert, durch die das gefrorene Konfekt entnommen werden kann, ein Halbkreis ist, und der maximale Abstand zwischen zwei Punkten auf der Schwächungslinie 100 % der Breite des gefrorenen Konfektprodukts entspricht.

12. Umhülltes gefrorenes Konfektprodukt nach einem der Ansprüche 1 bis 11, wobei die Länge des Öffnungsabschnitts im Bereich von 15 % bis 75 % der Länge der längsten Länge des gefrorenen Konfektprodukts liegt.

## Revendications

1. Produit de confiserie congelée emballé comprenant un produit de confiserie congelée et un emballage, dans lequel l'emballage comprend une face avant, une face arrière, et des extrémités scellées, la face arrière ayant un scellement longitudinal traversant entre les extrémités scellées, la face avant de l'emballage présente au moins une ligne de fragilité définissant une ouverture à travers laquelle la confiserie congelée peut être prélevée et la au moins une ligne de fragilité est positionnée à côté de la face avant du produit de confiserie congelée, dans lequel au moins une ligne de fragilité définissant une ouverture à travers laquelle le produit de confiserie congelée peut être prélevé correspond à de 5 % à 95 % du contour de la forme transversale de la face opposée du produit de confiserie congelée, **caractérisé en ce que** le contour de la forme transversale du produit de confiserie congelée est ovale, et la largeur de l'ouverture est d'au plus 100 pourcent de la largeur de la forme transversale du produit de confiserie congelée.

2. Produit de confiserie congelée emballé selon la revendication 1, dans lequel au moins une ligne de fragilité définissant une ouverture à travers laquelle le produit de confiserie congelée peut être prélevé correspond au contour de la forme de la face opposée du produit de confiserie congelée.

3. Produit de confiserie congelée emballé selon l'une quelconque des revendications 1 à 2, dans lequel la face avant de l'emballage présente une ligne de fragilité définissant une ouverture à travers laquelle la confiserie congelée peut être prélevée.

4. Produit de confiserie congelée emballé selon l'une quelconque des revendications 1 à 3, dans lequel la forme de la ligne de fragilité définissant une ouverture à travers laquelle la confiserie congelée peut être prélevée est un demi-cercle.

5. Produit de confiserie congelée emballé selon l'une quelconque des revendications 1 à 4, dans lequel l'emballage est un emballage Flow Warp.

6. Produit de confiserie congelée emballé selon l'une quelconque des revendications 1 à 5, dans lequel le produit de confiserie congelée comprend une confiserie congelée.

7. Produit de confiserie congelée emballé selon la revendication 6, dans lequel la confiserie congelée est une crème glacée.

8. Produit de confiserie congelée emballé selon l'une quelconque des revendications 1 à 7, dans lequel le produit de confiserie congelée est une confiserie congelée enrobée.

9. Produit de confiserie congelée emballé selon l'une quelconque des revendications 1 à 8, dans lequel la longueur du produit de confiserie congelée est de 90 mm à 150 mm.

10. Produit de confiserie congelée emballé selon l'une quelconque des revendications 1 à 9, dans lequel la largeur du produit de confiserie congelée est de 45 mm à 75 mm.

11. Produit de confiserie congelée emballé selon l'une quelconque des revendications 1 à 10, dans lequel la ligne de fragilité définissant une ouverture à travers laquelle la confiserie congelée peut être prélevée est un demi-cercle et la distance maximum entre deux points de la ligne de fragilité est 100 % de la largeur du produit de confiserie congelée.

12. Produit de confiserie congelée emballé selon l'une quelconque des revendications 1 à 11, dans lequel la longueur de la portion d'ouverture est de 15 % à 75 % de la longueur de la longueur la plus longue du produit de confiserie congelée.
